# EUROPÄISCHE PATENTANMELDUNG

(11) **EP 1 126 582 A2**
(43) Veröffentlichungstag der Anmeldung: **22.08.2001**
(21) Anmeldenummer: 00126254.2
(22) Anmeldetag: 01.12.2000
(51) Int. Cl.: H02K 7/06, H02K 29/08, H02K 16/04

(54) **Linearstellantrieb**

(30) Priorität: 26.01.2000 DE 10003129
(71) Anmelder: Pierburg Aktiengesellschaft, 41460 Neuss (DE)
(72) Erfinder: Dismon, Heinrich, 52538 Gaugelt (DE); Köster, Andreas, 45149 Essen (DE)
(74) Vertreter: Ter Smitten, Hans

(57) **Zusammenfassung**

Ausgehend von einem Linearstellantrieb (1) mit einem von einem elektrischen Stellantrieb bewegbaren Linearstößel (7) wird die Aufgabe, hohe Verstellkräfte bei einer hohen Verstelldynamik zu erzielen, dadurch gelöst, daß der elektrische Stellantrieb ein elektronisch kommutierter Elektromotor ist, der zumindest zwei einen Rotor (16) antreibende Statoren (11, 12, 15) aufweist, wobei der Rotor (16) den Linearstößel (7) konzentrisch umgibt,

## Beschreibung

Die Erfindung betrifft einen Linearstellantrieb mit einem von einem elektrischen Stellantrieb bewegbaren Linearstößel gemäß den Merkmalen des Oberbegriffes des Patentanspruches 1.

Linearstellantriebe sind bekannt. Es gibt zum Beispiel Linearstellantriebe, die pneumatisch arbeiten. Solche pneumatische Linearstellantriebe haben jedoch den Nachteil, daß eine aufwendige Druckversorgung erforderlich ist und die Steuerung eines solchen pneumatischen Stellantriebes problematisch ist. Außerdem kann es sehr schnell bei Undichtigkeiten des Drucksystems zum Ausfall des Linearstellantriebes kommen.

Weiterhin gibt es Linearstellantriebe, bei denen zur Bewegung eines Linearstößels ein Proportionalmagnet zum Einsatz kommt. Solche Proportionalmagnete lassen sich zwar sehr feinfühlig ansteuern, haben jedoch den Nachteil, daß für den Fall, daß hohe Kräfte aufzubringen sind, auch entsprechend große Magnete zum Einsatz kommen müssen, die einen großen Bauraum benötigen, der nicht für alle Anwendungsfälle zur Verfügung steht.

Außerdem sind Linearstellantriebe bekannt, bei denen die Drehbewegung eines Gleichstrommotors über zwischengeschaltete Getriebe in eine Linearbewegung umgesetzt werden. Hiermit lassen sich zwar hohe Stellkräfte aufbringen, jedoch ist der Aufbau eines solchen Linearstellantriebes aufgrund der hohen Teilevielfalt kompliziert undo benötigt ebenfalls einen großen Bauraum

Der Erfindung liegt daher Aufgabe der Erfindung zugrunde, einen Linearstellantrieb bereitzustellen, mit dem die eingangs geschilderten Nachteile vermieden werden. Außerdem soll eine Anwendung für einen solchen Linearstellantrieb angegeben werden.

Diese Aufgabe ist durch die Merkmale des Patentanspruchs 1 gelöst.

Erfindungsgemäß ist der elektrische Stellantrieb als ein elektronisch kommutierter Elektromotor ausgebildet, wobei der elektronisch kommutierte Elektromotor zumindest zwei (vorzugsweise drei) einen Rotor antreibende Statoren aufweist, wobei der Rotor den Linearstößel konzentrisch umgibt.

Mit dieser Anordnung werden die folgenden Vorteile erreicht:
- Aufgrund der Verwendung eines elektronisch kommutierten Elektromotors ist die Stromaufnahme besonders gering,
- der elektronisch kommutierte Elektromotor ist aufgrund der berührungslosen Kommutierung verschleißfrei,
- der elektronisch kommutierte Elektromotor läßt sich sehr feinfühlig ansteuern, so daß auch kleine Verstellwege für den Linearstößel einstellbar sind,
- durch die konstruktive Anordnung wird sehr wenig Bauraum in Anspruch genommen und eine kompakte Bauweise erzielt,
- mittels des elektronisch kommutierten Elektromotors, der in typischer Weise nur für kontinuierliche Drehbewegungen mit Konstantdrehzahlen ausgelegt ist, wird eine Linearbewegung erreicht,
- durch die konzentrische Anordnung des Rotors um den Linearstößel wird eine hohe Untersetzung erzielt, so daß mit geringem Stromverbrauch hohe Verstellkräfte aufgebracht werden können, undo
- es wird eine hohe Verstelldynamik erreicht.

In Weiterbildung der Erfindung sind zumindest die Statoren des elektronisch kommutierten Elektromotors sowie eine Steuerelektronik mit zugehörigen Sensoren einerseits und der Rotor mit dem Linearstößel andererseits getrennt voneinander in einem Gehäuse des Linearstellantriebes angeordnet. Dies hat den Vorteil, daß die Bereiche, in denen Verunreinigungen eindringen oder entstehen können, getrennt sind von Bereichen, in denen empfindliche Bauteile (wie Sensoren und Steuerelektronik) untergebracht sind. Dadurch wird die Zuverlässigkeit des Linearstellantriebes erhöht und die Lebensdauer wesentlich verlängert.

In Weiterbildung der Erfindung weist der Rotor eine Spindelmutter mit einem Gewinde zur Bewegung des Linearstößels auf, wobei auf dem Rotor von außen konzentrisch mehrere Magnetringe oder Konzentrisch ein vielfach polarisierter Magnetring angeordnet sind oder ist, und sich der Rotor im Bereich der Statoren befindet. Durch diese Anordnung wird eine extrem kompakte Bauweise erzielt, die darüber hinaus noch montagefreundlich ist, da zum Beispiel die mehreren Magnetringe oder der Magnetring auf den Rotor bei entsprechender Konstruktion aufgesteckt oder auch aufgeklebt werden können oder kann.

Weitere vorteilhafte Ausgestaltungen der Erfindung sind in den weiteren Unteransprüchen angegeben.

Ein bevorzugtes Anwendungsgebiet des erfindungsgemäßen Linearstellantriebes ist die Positionierung von Abgasrückführventilen oder den Schaufeln eines variablen Turboladers, wobei die Abgasrückführventile bzw. der Abgasturbolader bei Brennkraftmaschinen zum Beispiel von Fahrzeugen zum Einsatz kommt. Die Verwendung des erfindungsgemäßen Linearstellantriebes im Bereich von Kraftfahrzeugen, insbesondere im Bereich der beiden genannten Anwendungen, ist deshalb besonders vorteilhaft, da hier in der Regel wenig Bauraum zur Verfügung steht und ein Ausfall des Linearstellantriebes nachteilige Konsequenzen, wie zum Beispiel der Ausfall des Antriebsmotors des Fahrzeuges, nach sich zieht. Außerdem ist es erforderlich, bei Abgasrückführventilen oder auch bei Turboladern auf externe Anforderungen (wie zum Beispiel Gasgeben durch den Fahrer oder Umweltbedingungen) schnell und kurzfristig zu reagieren. Hier bietet sich der Einsatz des erfindungsgemäß ausgestalteten Linearstellantriebes in besonders vorteilhafter Weise an.

Ein Ausführungsbeispiel des erfindungsgemäßen Linearstellantriebes, auf den die Erfindung jedoch nicht beschränkt ist, ist im folgenden erläutert und anhand der Figuren beschrieben.

Es zeigen:
**Figur 1:**
   den konstruktiven Aufbau eines erfindungsgemäßen Linearstellantriebes,
**Figur 2:**
   den Wirkaufbau des erfindungsgemäßen Linearstellantriebes,
**Figur 3:**
   die Ansteuerungen der Statoren (Wicklungen) des elektronisch kommutierten Motors.

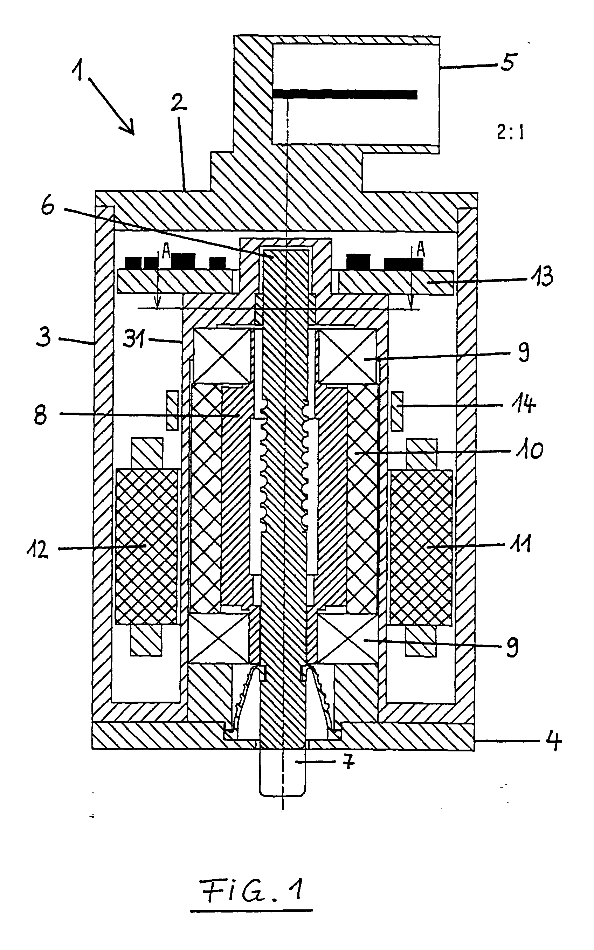

Figur 1 zeigt ein Ausführungsbeispiel eines erfindungsgemäßen Linearstellantriebes 1. Der Linearstellantrieb 1 weist ein in etwa topfförmiges Gehäuse auf, das aus einem Oberteil 2, einem Mittelteil 3 sowie einem Unterteil 4 besteht. Diese Aufteilung hat den Vorteil, daß damit der Linearstellantrieb 1 besonders montagefreundlich ist. An dem Oberteil 2 ist ein Stekker 5 für die Energiezufuhr und Signalübertragung angeordnet.

Im Bereich des Mittelteils 3 ist in der Längsachse eine Spindel 6 angeordnet, wobei das Ende der Spindel 6 als Linearstößel 7 ausgebildet ist und aus dem Unterteil 4 herausragt und über geeignete Mittel mit dem anzutreibenden Element (wie beispielsweise einem Abgasrückführventil oder einem Turbolader zur Verstellung der Schaufeln des Turboladers) verbunden wird. Konzentrisch um die Spindel 6 herum ist eine Spindelmutter 8 angeordnet, wobei ein Gewinde der Spindel 6 in ein Gegengewinde der Spindelmutter 8 eingreift. Die Spindelmutter 8 ist vorzugsweise jeweils im letzten Drittel ihrer Längserstreckung mittels Lager 9 (insbesondere Kugellager) drehbar gelagert. Konzentrisch um die Spindelmutter 8 herum sind mehrere Magnetringe 10 fest mit der Spindelmutter 8, insbesondere durch Verkleben, verbunden.

Ebenfalls im Bereich des Mittelteils 3 und im Bereich der Magnetringe 10 sind mehrere Statoren 11 und 12 (und weitere, die in Figur 1 nicht erkennbar sind) angeordnet.

Das Mittelteil 3 des Linearstellantriebs 1 ist so ausgebildet, daß sich im Inneren des Mittelteiles 3 topfförmig eine Zwischenwand 31 erstreckt, die die bewegten Teile (Spindelmutter 8 mit den Magnetringen 10) von den feststehenden Teilen (Statoren 11, 12) trennt. Damit wird wirksam sichergestellt, daß Verunreinigungen aus dem Bereich der bewegten Teile nicht in den anderen Bereich eindringen können. Denn in diesem anderen Bereich sind nicht nur die Statoren 11 und 12 untergebracht, sondern auch eine Steuerelektronik 13 sowie Hallsensoren 14 zur Positionserfassung der Magnetringe bzw. von Referenzpunkten.

Durch entsprechende Ansteuerung der Statoren 11 und 12, die als Spulen (Wicklungen, ggf. mit Kern) ausgebildet sind, dreht sich die Spindelmutter 8 mit den außen aufgebrachten Magnetringen 10, so daß der Linearstößel 7 aus dem Gehäuse heraus- oder in das Gehäuse hineingefahren wird. Die Positioniervorgabe erfolgt vorzugsweise über den Stecker 5 an die Steuerelektronik 13, die dieses Signal in Ansteuersignale für die Statoren 11 und 12 umsetzt. Alternativ dazu ist es denkbar, die Steuerelektronik 13 außerhalb des Gehäuses anzuordnen, wodurch jedoch der Vorteil der kompakten Bauweise aufgegeben würde.

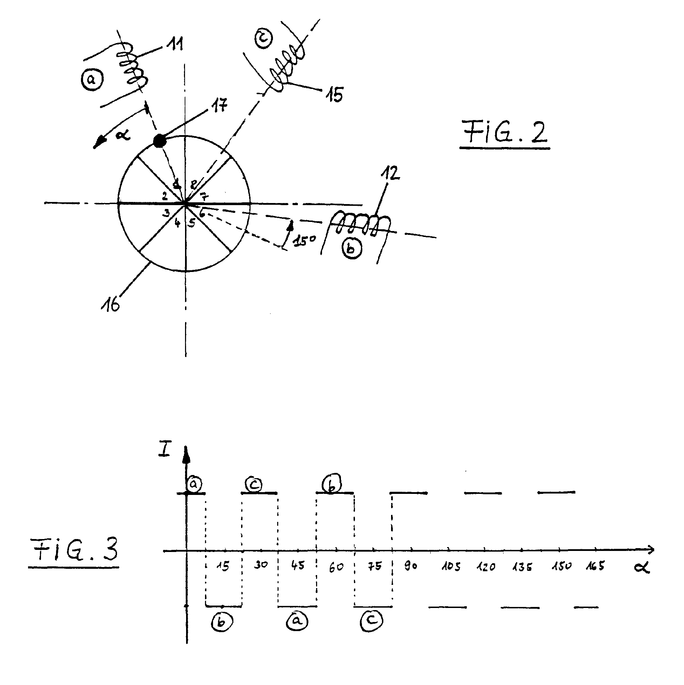

Figur 2 zeigt den elektrischen Wirkaufbau des Linearstellantriebes 1. In dieser Figur ist neben den beiden schon erwähnten Statoren 11 und 12 ein dritter Stator 15 gezeigt, wobei sich der elektronisch kommutierte Motor auch mit zwei oder mehr als drei Statoren verwirklichen läßt. Die Drehrichtung ist mit a bezeichnet. Die drei Statoren 11, 12 und 15 sind derart zueinander versetzt, daß durch entsprechende Bestromung der Wicklungen der mit der Bezugsziffer 16 bezeichnete Rotor (bestehend aus Spindelmutter 8 und konzentrisch angeordneten Magnetringen 10, in diesem Falle 8 Stück) sicher anlaufen kann und die Drehbewegung sichergestellt ist. Die Positionierbarkeit ergibt sich bei der in Figur 2 gezeigten Anordnung durch folgenden Zusammenhang: Eine komplette Drehbewegung, entsprechend 360°, aufgeteilt auf 8 Magnetringe (Pole) und die Verwendung von 3 Spulen ergibt: 360° : 8 Magnetringe : 3 Spulen = 15°. Durch andere Wahl der Anzahl der Magnetringe (Pole) und der Zahl der Spulen (Statoren) kann Einfluß genommen werden auf die Positionierbarkeit bzw. das Auflösungsvermögen des Linearstellantriebes 1. Erhöht man beispielsweise die Anzahl der Pole sowie die Anzahl der Spulen, ergibt sich auch eine entsprechend bessere Positionierbarkeit. So würde zum Beispiel die Verwendung von 24 Polen und der Einsatz von 6 Spulen zu einem Auflösungsvermögen von 2,5° führen.

Figur 3 zeigt die Ansteuerung der 3 Statoren 11, 12 und 15, wobei die 3 Spulen der Statoren 11, 12 und 15 mit der in Figur 3 beispielhaft gezeigten Signalfolge angesteuert werden. Die Stromstärke I ist dabei so zu wählen, daß in der jeweils bestromten Spule ein solch starkes Magnetfeld aufgebaut wird, mit dem der Vortrieb der Spindelmutter 8 über die Magnetringe 10 sicher gewährleistet ist. Anstelle der in Figur 3 gezeigten Rechteck-Signalfolge können auch andere Signalformen (zum Beispiel sinusförmiger Signalverlauf) zum Einsatz kommen.

## Patentansprüche

1. Linearstellantrieb (1) mit einem von einem elektrischen Stellantrieb bewegbaren Linearstößel (7), dadurch gekennzeichnet, daß der elektrische Stellantrieb ein elektronisch kommutierter Elektromotor ist, der zumindest einen Rotor (16) antreibende Statoren (11, 12, 15) aufweist, wobei der Rotor (16) den Linearstößel (7) konzentrisch umgibt.

2. Linearstellantrieb (1) nach Anspruch 1, dadurch gekennzeichnet, daß zumindest die Statoren (11, 12, 15) des elektronisch kommutierten Elektromotors sowie eine Steuerelektronik (13) mit zugehörigen Sensoren (14) einerseits und der Rotor (16) mit dem Linearstößel (7) andererseits getrennt voneinander in einem Gehäuse (2, 3, 4) des Linearstellantriebes (1) angeordnet sind.

3. Linearstellantrieb (1) nach Anspruch 1 oder 2, dadurch gekennzeichnet, daß der Rotor (13) eine Spindelmutter (8) mit einem Gewinde zur Bewegung des Linearstößels (7) aufweist, wobei auf dem Rotor (16) von außen konzentrisch mehrere Magnetringe (10) oder Konzentrisch eine vielfach polarisierter Magnetring angeordnet sind oder ist und sich der Rotor (16) im Bereich der Statoren (11, 12, 15) befindet.

4. Linearstellantrieb (1) nach einem der Ansprüche 1 bis 3, dadurch gekennzeichnet, daß der Rotor (16) wenigstens einen erfaßbaren Referenzpunkt (17) aufweist.

5. Linearstellantrieb (1) nach einem der Ansprüche 2 bis 4, dadurch gekennzeichnet, daß die Sensoren (14) als berührungslos wirkende Hallsensoren ausgebildet sind.

6. Linearstellantrieb (1) nach einem der vorhergehenden Ansprüche, dadurch gekennzeichnet, daß der Linearstößel (7) unverdrehbar linear bewegbar ist.

7. Linearstellantrieb (1) nach einem der vorhergehenden Ansprüche, gekennzeichnet durch seine Verwendung bei Abgasrückführventilen für Brennkraftmaschinen.

8. Linearstellantrieb (1) nach einem der vorhergehenden Ansprüche, gekennzeichnet durch seine Verwendung bei variablen Turboladern für Brennkraftmaschinen, wobei mittels des Linearstellantriebs (1) die Schaufeln des Turboladers verstellbar sind.
